# EUROPÄISCHE PATENTSCHRIFT

(11) **EP 0 665 076 B1**
(45) Veröffentlichungstag und Bekanntmachung des Hinweises auf die Patenterteilung: **17.11.1999**
(21) Anmeldenummer: 94111200.5
(22) Anmeldetag: 19.07.1994
(51) Int. Cl.: B23F 19/00, B23F 21/03, B23F 23/12, B24B 53/075

(54) **Verfahren zum Feinbearbeiten von Zahnrädern und dafür geeignetes innenverzahntes Werkzeug sowie Verfahren zum Abrichten dieses Werkzeugs und dafür geeignetes Abrichtrad**
Method for finishing gears using a finishing tool in the shape of an internal gear, method and tool for dressing the finishing tool
Procédé pour la finition de roues dentées au moyen d'un outil sous forme de roue à denture intérieure et procédé et outil pour le dressage de l'outil de finissage

(30) Priorität: 01.09.1993 DE 4329358
(43) Veröffentlichungstag der Anmeldung: 02.08.1995
(73) Patentinhaber: THE GLEASON WORKS, Rochester New York 14692-2970 (US)
(72) Erfinder: Schriefer, Herbert, Dr.-Ing., D-82131 Gauting (DE)
(74) Vertreter: Stahl, Gerhard F.W.

(56) Entgegenhaltungen:
- DE-C- 3 930 322
- DE-U- 8 910 726
- DE-U- 9 300 936
- GB-A- 2 018 178
- GB-A- 2 108 027
- GB-A- 2 151 520
- US-A- 2 228 965
- US-A- 2 228 967
- WERKSTATT UND BETRIEB, Bd.126, Nr.7, Juli 1993, MÜNCHEN Seiten 411 - 415 H. SCHRIEFER 'Zahnflanken-Feinbearbeitung für die Gross-Serienfertigung'

## Beschreibung

Die Erfindung betrifft ein Verfahren nach dem Oberbegriff des Hauptanspruchs.

Die Erfindung geht von einem Verfahren aus, dessen Prinzip in der nicht vorveröffentlichten Patentanmeldung P 42 14 851.0 beschrieben ist und das mit einem innenverzahnten Werkzeug auf einer Maschine ausführbar ist, die in der ebenfalls nicht vorveröffentlichten Patentanmeldung P 43 23 935.8 behandelt wird. Die Praxis hat gezeigt, daß das Bearbeiten von korrigierten Verzahnungen mit einem außenverzahnten Werkzeug unter simultaner Interpolation von Bewegungen in drei senkrecht zueinander stehenden Achsen auf einer Maschine ohne Wiege od. dgl. bei kleinen Werkradbreitenkorrekturen (z.B. Balligkeiten) keine Probleme aufwirft, daß das Bearbeiten mit einem innenverzahnten Werkzeug dagegen vielfach keine befriedigenden Arbeitsergebnisse bringt.

Der Grund liegt darin, daß bei einem außenverzahnten Werkrad und Werkzeug zwei konvexe Teilkörper Relativbewegungen aufeinander ausführen. Bei einem außenverzahnten Werkrad und einem innenverzahnten Werkzeug sind jedoch ein konvexer und ein konkaver Teilkörper in Kontakt. Außerhalb der Kontaktzone sind daher die Kontaktabstände wesentlich geringer und es besteht somit bei einer Relativbewegung zwischen Werkrad und Werkzeug auch bei kleinen Werkradbreitenkorrekturen Verschneidungsgefahr durch sekundäre Schnitte oder Kantenkontakt. Weiterhin führen die geringeren Kontaktabstände zu einer erhöhten Empfindlichkeit hinsichtlich der Lage und der Größe der Kontaktzone. Dies wiederum hat Einfluß auf das rechts- und linksdrehende Gleichgewicht der Kontaktkräfte und somit auf den lokalen momentanen Flankenabtrag, der entscheidend die erzielbare Flankenqualität bestimmt.

Orthogonal zueinander stehende raumkinematische Bewegungen der kantaktierenden Teilkörper von Werkrad und Werkzeug reichen daher insbesondere bei innenverzahnten Werkzeugen vielfach nicht aus. In der Kontaktzone besteht dabei ein rotatorischer Freiheitsgrad um die Kontaktnormale, der in geeigneter Weise simultan in die orthogonale Dreiachseninterpolation mit einzubeziehen ist.

Die simultane Interpolation der drei Orthogonalachsen zusammen mit einer Interpolation der Achskreuzwinkeländerung stellt die für diese Aufgabenstellung erforderliche Minimalkinematik dar. Durch die Einführung redundanter Freiheitsgrade, wie z.B. der Wiegenkippung, wie es bei allen bisher bekannten Weichschab- und Honmaschinen praktiziert wird, ist nur eine Lösung der genannten Aufgabe mit zusätzlichen Maschinenachsen realisiert.

Ein weiteres Verfahren zum Feinbearbeiten der Flanken von zahnradförmigen Werkstücken mit einem innenverzahnten Werkzeug, das mit unter einem Achskreuzwinkel gekreuzten Achsen von Werkzeug und Werkstück mit dem Werkstück in kämmendem Zahneingriff steht und dabei relativ zum Werkstück bewegt wird, ist in DE-U-93 00 936.4 offenbart. Bei diesem bekannten Verfahren wird die Balligkeit der Zahnform durch die CNC-gesteuerte Schwenkbewegung um eine vertikale Achse (A) bewirkt. Eine Verschwenkung des Werkzeugs um eine horizontale Achse (B) dient zur Einstellung des Achskreuzwinkels, d.h. des Winkels zwischen den Drehachsen von Werkstück und Werkzeug. Dieser Achskreuzwinkel wird während der Bearbeitung nicht verändert.

Der Erfindung liegt die Aufgabe zugrunde, das gattungsgemäße Verfahren so zu verbessern, daß auch mit innenverzahnten Werkzeugen befriedigende Arbeitsergebnisse erzielt werden.

Diese Aufgabe wird mit den im kennzeichnenden Teil des Hauptanspruchs angegebenen Maßnahmen gelöst, wenn ein nicht korrigiertes Werkzeug verwendet wird. Wird ein korrigiertes Werkzeug verwendet, dann ist eine Weiterbildung des Verfahrens nach Anspruch 2 erforderlich.

Weitere zweckmäßige Ausgestaltungen bzw. Weiterbildungen des Verfahrens sind in den Ansprüchen 3 bis 9 angegeben.

Das Verfahren nach Anspruch 1 beinhaltet zwei voneinander unabhängige kinematische Effekte. Die simultane Relativverschiebung des Werkrades gegenüber dem Werkzeug in drei Orthogonalachsrichtungen x, y, z erlaubt eine weitgehend freie Gestaltbarkeit der Form der Werkrad- und Werkzeugteilkörper und somit der Flankenbreitenkorrekturen (ballig, konisch, hohl, konisch-ballig, hohl-ballig) und der momentanen Relativlage der Bearbeitungszonen sowohl auf dem Werkrad als auch auf den Werkzeugflanken. Auf diese Weise sind vorteilhafte Vorschubstrategien axial, diagonal, quer oder radial zur Werkradachse nacheinander oder ineinander übergehend machbar. Die simultane Rotation des Werkzeugs um die Achskreuzwinkel-Einstellachse erlaubt es, jede momentane relative Kontaktlage der Körper der Zahnlücken und der Zähne von Werkrad und Werkzeug so relativ zu verdrehen, daß keine sekundären Schnitte auftreten und definierte Kontaktbedingungen entstehen. Der kinematisch wirksame Teilkörper des Werkzeugs ist nach Anspruch 1 zylindrisch, d.h. mit diesem Teilkörper sind nur ballige

Werkradflanken herstellbar, deren kinematisch wirksamer Teilkörper gleiche oder größere kinematische Balligkeit hat als der zylindrische Teilkörper des Werkzeugs.

Der Anspruch 2 erweitert das Verfahren dahingehend, daß das Werkzeug einen balligen Teilkörper hat. Damit sind ballige, gerade und hohlballige Werkradflanken erzeugbar und die Größe der Kontaktzone zwischen Werkrad- und Werkzeugflanken ist gezielt beeinflußbar.

Mit den Ansprüchen 3, 4, 10, 11, 12, 13 und 14 wird die Möglichkeit beschrieben, mit einem oder mehreren Werkzeugen in einer Aufspannung zu arbeiten, die unterschiedliche kinematisch wirksame Breitenkorrekturen haben. Es kann z.B. vorteilhaft sein, ein Vorhonen mit einem schnittfreudigen Werkzeug mit kleiner Kontaktzone durchzuführen, um die Prozeßkräfte zu senken und ein Fertighonen, bei dem nur die Flanken geglättet werden, mit großer Kontaktzone.

Die Ansprüche 5 und 6 erläutern die Möglichkeit, ein Vor- und Fertighonen im Zweiflankenkontakt oder das Vorhonen im Einflankenkontakt auszuführen, wobei in diesem Fall, wie in Anspruch 8 angegeben, der Einflankenkontakt mit elektronischer Zwangsführung erfolgt. Mit den Ansprüchen 1 und 2, zusammen mit dem zwangsgeführten Einflankenkontakt, ergibt sich weitgehend unabhängige freie Gestaltbarkeit der Werkrad-Rechts- und Linksflanken-Breitenkorrekturen. Der anschließende freilaufende Zweiflankenkontakt wird durch Relativverschiebungen der Teilkörper herbeigeführt und dient nur der Flankenglättung.

Die Ansprüche 9 und 14 beschreiben ein Verfahren unter Verwendung eines Werkzeugs, das mehrere gleichartige oder verschiedene Verzahnungen kennzeichnet. Im Idealfall ist es möglich, die einzelnen zylindrisch angeordneten Verzahnungen mit den X- und Z-Achsen der Maschine jeweils in die Achskreuzung zu verschieben, und den Werkzeuginnendurchmesser durch Profilverschiebung bis zum jeweiligen Standzeitende zu vergrößern. Voraussetzung ist dabei, daß weder das Werkrad selbst noch die Spannvorrichtung Kollision mit den in Werkzeugaxialrichtung liegenden weiteren Verzahnungen haben, da diese Verzahnungen aus Kollisionsgründen nicht auf einem zylindrischen, sondern auf einem hyperbolischen Teilkörper angeordnet sein müßten.

Das in den Ansprüchen 1 und 2 beschriebene Verfahren läßt es jedoch auch zu, daß die Teilkörper sowohl des Werkrades als auch des Werkzeuges konisch oder konisch-ballig sein können. Dadurch wird es möglich, das Werkrad in einem durch die X- Y- Z- Verschiebung und A-Verdrehung gekippten Zustand des Werkzeuges zu bearbeiten und somit die noch unverbrauchten weiteren Werkzeugverzahnungen aus dem Kollisionsbereich zu bringen.

Wird ein wellenförmiges Werkrad mit verschiedenen Verzahnungen in einer Aufspannung mit mehreren nebeneinander liegenden verschiedenen Werkzeugverzahnungen bearbeitet, so kann zur Kollisionsvermeidung mit Nachbarverzahnungen ebenfalls in gekipptem Werkzeugzustand bearbeitet werden.

Das Abrichten des innenverzahnten Werkzeugs mit einem entsprechenden Abrichtwerkzeug kann gern. Anspruch 15 im Prinzip so erfolgen wie die Bearbeitung eines Werkrades mit dem innenverzahnten Werkzeug. Von besonderem Vorteil ist es, wenn dabei für den Vor- und den Fertig-Honbereich unterschiedliche Zahnweiten erzeugt werden können für das Bearbeiten mit Ein- und Zweiflankenkontakt.

Der Anspruch 17 beschreibt ein Verfahren zum Abrichten unter Verwendung eines Abrichtrades mit einer belegten Stirnfase, die dazu dient, auf einem breiten durchgehenden Werkzeugbereich mit unterschiedlichen kinematisch wirksamen Breitenkorrekturen die tangential auslaufenden Freigänge für die Werkradbearbeitung zu trennen.

Die Erfindung läßt eine ganze Reihe von unter den Wortlaut der Ansprüche fallenden Ausführungsvarianten zu, die ebenfalls in den Schutzbereich fallen sollen. Insbesondere können die genannten Ausführungsvarianten auch für die Kombination außenverzahntes Werkzeug und Werkrad angewandt werden, was bei großen Werkradbreitenkorrekturen vorteilhaft sein kann. In diesem Fall fällt auch das Weichschaben und Hartschaben in den Schutzbereich.

Wegen der Definition verschiedener hier verwendete Begriffe wir Honen, Weichschaben, Hartschaben, Teilkörper usw. wird auf "H. Schriefer: Zahnflanken-Feinbearbeitung für die Großserienfertigung" in der DE-Zeitschrift "Werkstatt und Betrieb 126 (1993) 7, S. 411 - 415" verwiesen.

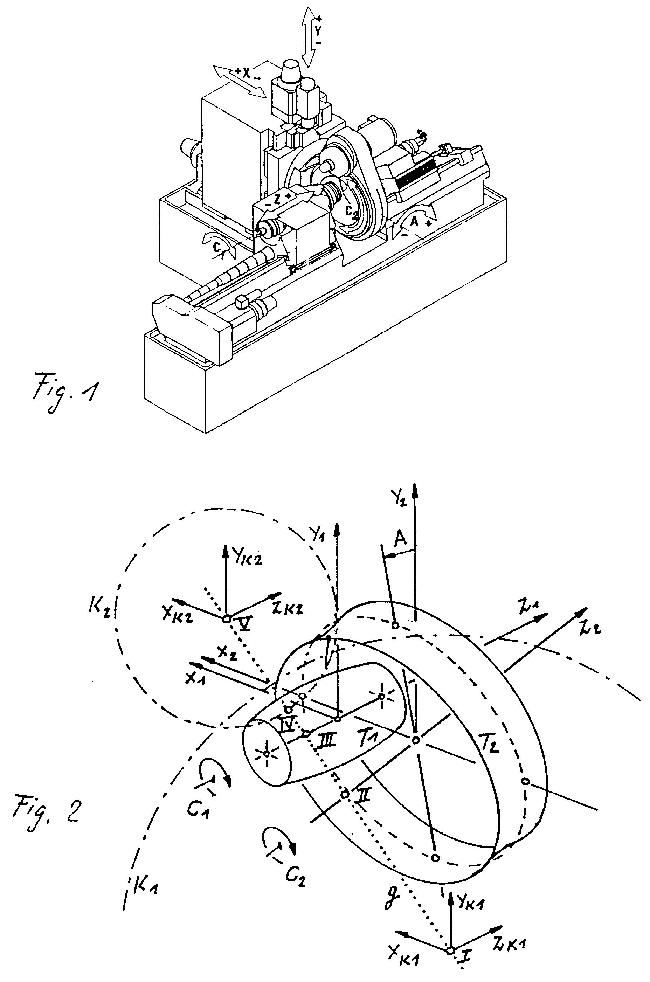

Die Erfindung wird nachstehend anhand einiger Ausführungsbeispiele beschrieben, die in Figuren dargestellt werden. Dabei zeigt
- Fig. 1: den Aufbau einer Maschine, auf der die erfindungsgemäßen Verfahren ausführbar sind bzw. das erfindungsgemäße Werkzeug einsetzbar ist in einer perspektivischen Darstellung. Es sind die drei orthogonal aufeinanderstehenden Maschinenachsen X, Y und Z sowie die Rotationsachse A, die simultan mit den X-, Y-, Z-Achsen interpoliert und mit der der Achskreuzwinkel eingestellt wird, erkennbar. Die Achse C₁ ist die Werkradrotationsachse und die Achse C₂ ist die Werkzeugrotationsachse. Diese beiden Achsen können freilaufend sein oder mit Hilfe eines elektronischen Getriebes zwangsgeführt werden.
- Fig. 2: eine räumliche Darstellung der Teilkörper von Werkrad T₁ und Werkzeug T₂ sowie die dem momentanen Kontaktpunkt IV zugeordneten Hüllkugeln K₁ und K₂ der Kontaktlinie, die durch den Kontaktpunkt IV geht. Das Koordinationssystem X₁-Y₁-Z₁ ist achsorientiert dem Werkrad zugeordnet und das Koordinatensystem X₂-Y₂-Z₂ ist achsorientiert dem Werkzeug zugeordnet.
Das Koordinationssystem X_{K1}-Y_{K1}-Z_{K1} beschreibt den Hüllkugelmittelpunkt der momentanen Werkradflankenlinienkorrektur und das Koordinationssystem X_{K2}-Y_{K2}-Z_{K2} beschreibt den Hüllkugelmittelpunkt der Werkzeugflankenlinienkorrektur. C₁ und C₂ sind die Werkrad- und Werkzeugrotationen und A ist die momentane Rotationsstellung des Werkzeuges um die Achskreuzwinkel-Einstellachse X₂. Die Gerade g beschreibt die momentane Kontaktbedingung für den Kontaktpunkt IV zwischen den Teilkörpern und den Hüllkugeln. Zu diesem Zweck muß die Gerade g die Hüllkugelmittelpunkte in I und V sowie die Werkradachse in III und die Werkzeugachse in II schneiden. Wird z.B. auf dem Werkradteilkörper T₁ eine Kontaktpunktfolge vorgesehen, die den gesamten Körper in Breitenrichtung Z₁ einhüllt, so ist die simultane Rotationsverschiebung zwischen X₁-Y₁-Z₁ und X₂-Y₂-Z₂ so zu wählen, daß die Gerade g o.g. Bedingungen erfüllt. Gleichzeitig kann eine Kontaktpunktfolge auf dem Werkzeugteilkörper T₂ vorgegeben werden, wobei sich bei Einhaltung o.g. Kontaktbedingungen die Teilkörperoberflächen T₁ und T₂ dann relativ aufeinander verschieben.
Selbstverständlich sind die Kontaktpunktfolgen so vorzugeben, daß vorteilhafte Vorschübe entstehen, die durch eine stetige Relativlageveränderung zwischen Werkrad und Werkzeug gekennzeichnet sind.
Es ist erkennbar, daß z.B. die Mittelpunkte der Hüllkugeln K₁ und K₂ auch so liegen können, daß breitenhohle, konische oder konisch-ballige Teilkörperformen entstehen. Gehen die Radien der Hüllkugeln gegen unendlich, ergeben sich zylindrische Teilkörper. Bei den genannten Teilkörperformen ist bei o.g. Kontaktbedingungen darauf zu achten, daß keine Mehrfachlösungen möglich sind. Das würde bedeuten, daß die Werkradflanke durch sekundäre Schnitte verfälscht wird. Auch Kantenkontakte, die vieldeutige Lösungen darstellen, müssen vermieden werden.
- Fig. 3: den Werkradteilkörper T₁ sowie die Bedingungen im Kontaktpunkt IV, durch den die Gerade g verläuft.
Im Kontaktpunkt IV haben die Teilkörper T₁, T₂ und die Hüllkugeln K₁ und K₂ tangentialen Kontakt, wobei eine Tangentialebene T, die orthogonal auf g steht, das verdeutlicht. Es ist vorstellbar, daß die einzelnen Teil- und Hüllkörper um die Gerade g verdrehbar sind, ohne o.g. Kontaktbedingung zu verletzen. Bei einem realen Zahnrad hat diese Verdrehung jedoch entscheidenden Einfluß auf das Kontaktverhalten zwischen Werkrad- und Werkzeugflanken. Es kann daher für jede momentane Kontaktstellung IV eine Linie L angegeben werden, die in der Ebene T liegt, die das Kontaktverhalten der Flanken beschreibt. Aus der momentanen Rotationslage von L ergibt sich die simultane Rotation A durch entsprechende geometrische Umrechnung.
- Fig. 4: eine Vorder,- Drauf- und Seitenansicht der Teil- und Hüllkörperkinematik. Es sind die momentanen werkradbreitenabhängigen Kontaktstellungen 0, 1 und 2 dargestellt. Der Kontaktpunkt verlagert sich von IV' nach IV und dann nach IV'' mit den dazugehörigen Geraden g', g und g''. Das Werkzeug folgt der Bahn (X₂-Y₂-Z₂)', (X₂-Y₂-Z₂) nach (X₂-Y₂-Z₂)''. Die Werkzeughüllkugelradien verändern sich mit R'_{K2}, R_{K2} und R''_{K2}. In der Vorderansicht ist die Rotationslage von L', L nach L'' gezeigt.

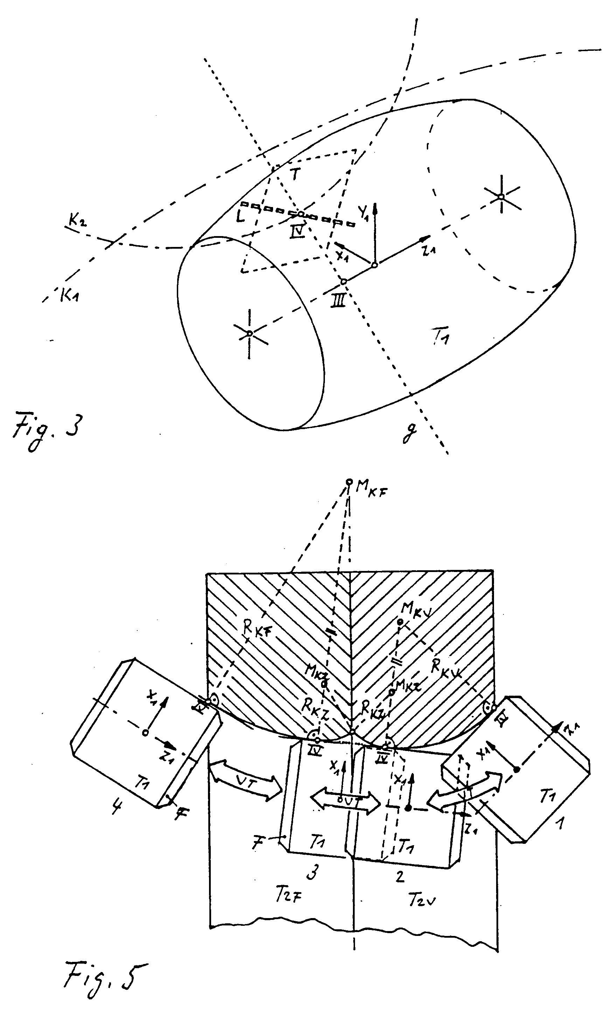

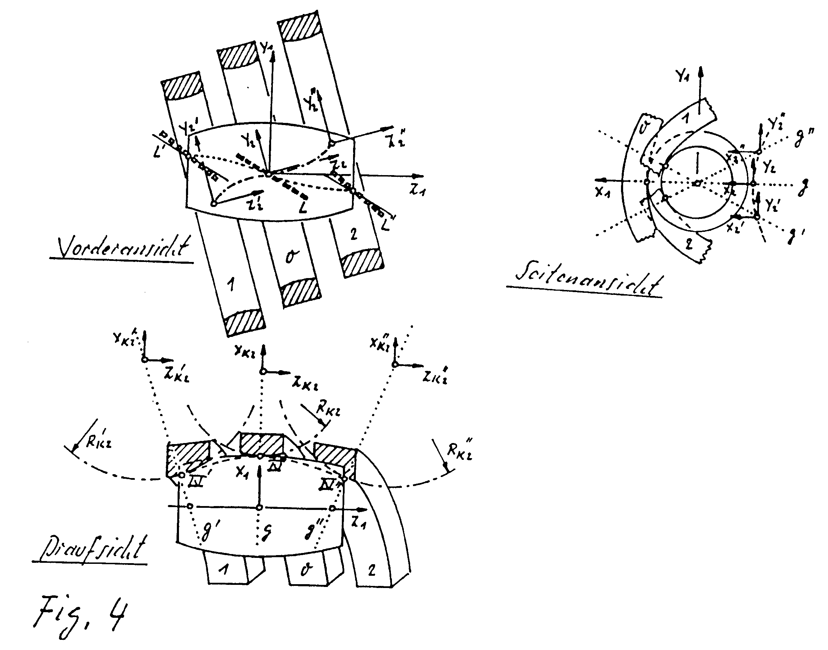

- Fig. 5: aus Gründen einer vereinfachten Darstellung die Werkzeugteilkörper T_{2F}, und T₂ᵥ ortsfest und die Werkrad- oder Abrichtradteilkörper T₁₍₁₋₄₎ in den Positionen 1-4 relativ zum Werkzeug bewegt. Weiterhin sind die Kontaktverhältnisse vereinfacht und stark vergrößert in einem ebenen Schnitt gezeichnet. Der Werkzeugteilkörper T_{2V} mit keinem kinematisch wirksamen Balligkeitsradius R_{KV} wird für das Vorhonen verwendet und der Werkzeugteilkörper T_{2F} mit größerem kinematisch wirksamen Balligkeitsradius R_{KF} für das Fertighonen. Die Balligkeitshüllkugelmittelpunkte sind M_{KV} und M_{KF}.
Die Teilkörper T₁₍₁₋₄₎ sind diejenigen des Abrichtrades, das mit beidseitigen Stirnfasen F versehen ist.
Beim Abrichten wird der Abrichtradteilkörper entlang der Hüllkugelbahnen von M_{KV} und M_{KF} geführt, wobei zwischen beiden Hüllkugeln ein tangentialer Übergang ist. Zwischen den beiden Hüllkugeln können zwei Zwischenhüllkugeln R_{KZ}, M_{KZ} liegen, die einen stirnseitigen Freigang beim Bearbeiten des Werkrades herbeiführen.
Beim Abrichten wird dieser Freigang mit Hilfe der hartstoffbelegten Stirnfase F des Abrichtrades erzeugt, wobei kontinuierlich die zylindrischen und die durch die Stirnfase angeschrägten Teilkörper mit den Zwischenhüllkugeln in Kontakt zu bringen sind. Dadurch wird ein unterbrechungsfreies Abrichten mit der Tangentialgeschwindigkeit V_{T} von der rechten Stirnseite des Werkzeuges zur linken erzielt. Es ist auch möglich, für den Vorhon-Werkzeugbereich mit einem grob belegten Abrichtradteil abzurichten und mit fortschreitendem abrichtradbreitenabhängigen Kontakt einen feinbelegten Abrichtradteil für den Fertig-Werkzeughonbereich in Kontakt zu bringen. Beim Vorund Fertighonen bewegt sich das Werkrad kontinuierlich tangential auf den Werkzeugteilkörper aus dem Vorhon- in den Fertighonbereich. Dadurch ist beim freilaufenden Honen sichergestellt, daß der Zahnflankenkontakt beim Übergang vom Vorhonen zum Fertighonen erhalten bleibt.

## Patentansprüche

1. Verfahren zum Feinbearbeiten der Flanken von zahnradförmigen Werkstücken mit balligen Zähnen, mit einem innenverzahnten Werkzeug, das mit unter einem Achskreuzwinkel gekreuzten Achsen von Werkzeug und Werkstück mit dem Werkstück in kämmendem Zahneingriff steht und dabei relativ zum Werkstück bewegt wird, wobei eine simultane Interpolation von Linearbewegungen in drei senkrecht zueinander stehenden Achsen (X, Y und Z) erfolgt,
**dadurch gekennzeichnet**,
daß die Relativbewegung des Werkzeugs zusätzlich eine ebenfalls simultan interpolierte Schwenkbewegung um die AchskreuzwinkelEinstellachse (X2) beinhaltet, derart, daß nicht nur die Zahnflanken von Werkzeug und Werkstück tangentialen Kontakt miteinander haben, sondern auch die sich in einem seine Lage ständig ändernden Kontaktpunkt (IV) berührenden Teilkörper des Werkzeugs und des Werkstücks ständig tangentialen Kontakt miteinander haben, wobei eine den Teilkörper des Werkzeugs und den Teilkörper des Werkstücks im jeweiligen Kontaktpunkt orthogonal durchdringende Gerade (g) nicht nur die Achse (C1) des Werkstucks bzw. seines Teilkörpers und die Achse (C2) des Werkzeugs bzw. seines Teilkörpers schneidet (Punkte III, II), sondern auch durch den Mittelpunkt (I) einer ideellen Kugel (K1) geht, die sich im Kontaktpunkt (IV) an den Teilkörper des Werkstücks anschmiegt.

2. Verfahren nach Anspruch 1, bei dem ein Werkzeug mit balligen Zähnen verwendet wird, **dadurch gekennzeichnet**, daß die Gerade (g) außerdem durch den Mittelpunkt (V) einer ideellen Kugel (K2) geht, die sich im Kontaktpunkt (IV) an den Teilkörper des Werkzeugs anschmiegt.

3. Verfahren nach Anspruch 1 oder 2, **gekennzeichnet durch** die Verwendung eines Werkzeugs, dessen Verzahnung in Breitenrichtung kinematisch unterschiedlich wirksame Breitenkorrekturen aufweist.

4. Verfahren nach Anspruch 3, **dadurch gekennzeichnet**, daß ein Bereich des Werkzeugs mit großer kinematisch wirksamer Breitenkorrektur für einen Vor-Honprozeß und ein Bereich ohne oder mit nur geringer kinematisch wirksamer Breitenkorrektur für einen anschließenden Fertig-Honprozeß verwendet wird.

5. Verfahren nach Anspruch 4, **dadurch gekennzeichnet**, daß der Vor-Honprozeß und der anschließende Fertig-Honprozeß mit Zweiflankenkontakt zwischen Werkzeug und Werkstück ablaufen.

6. Verfahren nach Anspruch 4, **dadurch gekennzeichnet**, daß der Vor-Honprozeß mit Einflankenkontakt und der anschließende Fertig-Honprozeß mit Zweiflankenkontakt zwischen Werkzeug und Werkstück abläuft.

7. Verfahren nach Anspruch 5 oder 6, **dadurch gekennzeichnet**, daß das Werkzeug mit dem Werkstück beim Vor-Honprozeß und beim anschließenden Fertig-Honprozeß freilaufend im Eingriff ist.

8. Verfahren nach Anspruch 5 oder 6, **dadurch gekennzeichnet**, daß das Werkzeug mit dem Werkstück beim Vor-Honprozeß zwangsgeführt und beim anschließenden Fertig-Honprozeß freilaufend im Eingriff ist.

9. Verfahren nach einem der Ansprüche 1 bis 8, **gekennzeichnet durch** die Verwendung eines Werkzeugs, das zwei oder mehr gleiche Verzahnungen in Achsrichtung nebeneinander aufweist, die durch Verschieben in der X- und/oder Y- und/oder Z-Achse in die Arbeitsposition verfahren werden, die in der oder außerhalb der Achskreuzung liegt.

10. Verfahren nach Anspruch 3 oder 4, **gekennzeichnet** durch die Verwendung eines innenverzahnten Werkzeugs, bei dem zwischen den Bereichen mit kinematisch unterschiedlicher Breitenkorrektur ein tangentialer Übergang vorhanden ist.

11. Verfahren nach Anspruch 10, dadurch **gekennzeichnet**, daß die Bereiche mit kinematisch unterschiedlich wirksamer Breitenkorrektur des Werkzeugs durch eine kontaktfreie Zone voneinander getrennt sind.

12. Verfahren nach Anspruch 10 oder 11, dadurch **gekennzeichnet**, daß die Bereiche mit kinematisch unterschiedlich wirksamer Breitenkorrektur des Werkzeugs unterschiedliche Schneidstoffe und/oder eine unterschiedliche Schneidengeometrie aufweisen.

13. Verfahren nach einem der Ansprüche 10 bis 12, dadurch **gekennzeichnet**, daß das Werkzeug aus wenigsten zwei Teilen zusammengesetzt ist, deren Versahnungen sich in ihrer kinematisch wirksamen Breitenkorrektur voneinander unterscheiden.

14. Verfahren nach einem der Ansprüche 10 bis 13, dadurch **gekennzeichnet**, daß das Werkzeug zwei oder mehr gleiche Verzahnungen der genannten Art in Achsrichtung nebeneinander aufweist.

15. Verfahren zum Abrichten eines innenverzahnten Werkzeugs mit einem verzahnten Abrichtrad, dessen Verzahnungsdaten denen des mit dem innenverzahnten Werkzeug zu bearbeitenden Werkstücks entsprechen und dessen Zahnflanken mit extrem harten Schleifkörnern belegt sind, **gekennzeichnet** durch einen Ablauf entsprechend Anspruch 1 oder 2 mit der Maßgabe, daß anstelle des Werkstücks das Abrichtrad als Werkzeug verwendet wird und das innenverzahnte Werkzeug als Werkstück fungiert.

16. Verfahren nach Anspruch 15 für ein Werkzeug, dessen Verzahnung einen VorHonbereich und einen Fertig-Honbereich aufweist, dadurch **gekennzeichnet**, daß der Vor-Honbereich und der Fertig-Honbereich mit Einflankenkontakt zwischen Abrichtrad und innenverzahntem Werkzeug und zwangsgeführt abgerichtet werden.

17. Verfahren nach Anspruch 15 oder 16, **gekennzeichnet** durch die Verwendung eines Abrichtrades, das eine sich über seine gesamte Zahnhöhe erstreckende Stirnfase von mindestens 45° aufweist, die ebenfalls mit extrem harten Schleifkörnern belegt ist.

## Claims

1. Process for finishing the flanks of workpieces in the shape of a toothed wheel with bulged teeth, with an internally toothed tool which, with axes of tool and workpiece crossed at an axial cross angle, meshes with the workpiece whilst being moved relative to the workpiece, and a simultaneous interpolation of linear movements takes place in three axes (X, Y and Z) which are positioned perpendicularly to each other,
**characterised in that**
the relative movement of the tool additionally incorporates an also simultaneously interpolated pivotal movement around the setting axis (X2) of the axis cross angle in such a manner that it is not only the toothed flanks of tool and workpiece which have continuous tangential contact with each other but also the sectional elements of the tool which make contact with each other in a contact point (IV) which constantly changes its position and the workpiece, and a straight (g) which orthogonally passes through the sectional element of the tool and the sectional element of the workpiece in a respective contact point intersects not only the axis (C1) of the workpiece or its sectional element and the axis (C2) of the tool or its sectional element (Points III, II) but also passes through the centre point (I) of an ideal sphere (K1) which nestles in the contact point (IV) against the sectional element of the workpiece.

2. Process according to Claim 1 in which a tool with bulky teeth is used, **characterised in that** the straight (g) additionally passes through the centre point (V) of an ideal sphere (K2) which nestles in the contact point (IV) against the sectional element of the tool.

3. Process according to Claim 1 or 2, **characterised by** the use of a tool the toothing of which offers in the width direction kinematically different width corrections.

4. Process according to Claim 3, **characterised in that** a range of the tool with large kinematic width correction is used for a pre-honing process, and one range without or only low kinematic width correction is used for a subsequent final honing process.

5. Process according to Claim 4, **characterised in** that the pre-honing process and the subsequent final honing process are carried out with two-flank contact between tool and workpiece.

6. Process according to Claim 4, **characterised in that** the pre-honing process is performed with single flank contact, and the subsequent final honing process is performed with two-flank contact between tool and workpiece.

7. Process according to Claim 5 or 6, **characterised in that** the tool with the workpiece are in a free-running manner engaged during the pre-honing process and during the subsequent final honing process.

8. Process according to Claim 5 or 6, **characterised in that** the tool is forcibly guided with the workpiece during the pre-honing process and in a free-running manner engaged during the subsequent final honing process.

9. Process according to one of Claims 1 to 8, **characterised by** the use of a tool comprising two or more identical toothings alongside each other in the axial direction which are moved by displacement in the X- and/or Y- and/or Z-axis into a working position which is located within or outside the axial crossing.

10. Process according to Claim 3 or 4, **characterised by** the use of an internally toothed tool having a tangential transition between the areas of kinematically different width correction.

11. Process according to Claim 10, **characterised in that** the areas of different kinematic width correction of the tool are separated from each other by a contactfree zone.

12. Process according to Claim 10 or 11, **characterised in that** the areas of kinematically different width correction of the tool comprise different cutting materials and/or a different cutting geometry.

13. Process according to one of Claims 10 to 12, **characterised in that** the tool is composed of at least two parts the toothings of which differ from each other in their kinematic width correction.

14. Process according to one of Claims 10 to 13, **characterised in that** the tool comprises alongside each other in the axial direction two or more identical toothings of the aforedescribed type.

15. Process for dressing an internally toothed tool with a toothed dressing wheel the toothing data of which correspond with those of the workpiece to be processed by the internally toothed tool and the toothed flanks of which are fitted with extremely hard grinding grains, **characterised by** a course as in Claim 1 or 2 according to which the dressing wheel is used as a tool in place of the workpiece, and the internally toothed tool acts as workpiece.

16. Process according to Claim 15 for a tool the toothing of which comprises a pre-honing area and a final honing area, **characterised in that** the pre-honing area and the final honing area are forcibly dressed with single-flank contact between dressing wheel and internally toothed tool.

17. Process according to Claim 15 or 16, **characterised by** the use of a dressing wheel comprising an end phase of at least 45° which extends over its entire tooth height and which is also covered with extremely hard grinding grains.

## Revendications

1. Procédé de finition des flancs de pièces en forme de roues dentées à denture convexe, au moyen d'un outil à denture interne dont l'axe se croise avec celui de la pièce, qui a sa denture en prise à la manière d'un peigne avec la pièce et qui se déplace par rapport à celle-ci, une interpolation des mouvements linéaires selon trois axes orthogonaux entre eux (X, Y et Z) ayant lieu simultanément, caractérisé en ce que
• le mouvement relatif de l'outil s'effectue en assurant de plus en même temps un mouvement interpolé, de basculement autour de l'axe (X₂) de réglage de l'angle de croisement, de manière que non seulement les dents de l'outil et de la pièce ont leurs flancs en contact tangentiel mais qu'également les corps primitifs de la pièce et de l'outil qui se touchent en un point de contact (IV) dont la position varie en permanence, sont toujours en contact tangentiel en ce point,
• une droite (g) traversant le corps primitif de l'outil et celui de la pièce, perpendiculairement à leur point de contact coupe non seulement l'axe (C1) de la pièce, ou de son corps primitif, ainsi que l'axe (C2) de l'outil ou de son corps primitif (points III, II), mais passe également par le centre (I) d'une sphère idéale (K1) qui au point de contact (IV) épouse la forme du corps primitif de la pièce.

2. Procédé selon la revendication 1, avec utilisation d'un outil à dents convexes,
caractérisé en ce que
la droite (g) Passe de plus par le centre (V) d'une sphère idéale (K2) qui au point de contact (IV) épouse la forme du corps primitif de l'outil.

3. Procédé selon la revendication 1 ou 2, caractérisé en ce qu'
on utilise un outil dont la denture dans la direction de sa largeur, présente des modifications de largeur cinématiquement différemment actives.

4. Procédé salon la revendication 3,
caractérisé en ce qu'
une zone de l'outil présentant une forte modification de largeur cinématiquement active est utilisée pour effectuer un prérodage tandis qu'une autre zone ne présentant pas ou seulement une faible correction de largeur cinématiquement active est utilisée pour effectuer ensuite un rodage de finition.

5. Procède selon la revendication 4,
caractérisé en ce que
le prérodage et le rodage de finition qui le suit s'effectuent par contact à deux flancs entre l'outil et la pièce.

6. Procédé selon la revendication 4,
caractérisé en ce que
le prérodage a lieu par contact à un flanc et le rodage de finition oui le suit a lieu par contact à deux flancs entre les pièce et l'outil.

7. Procédé selon la revendication 5 ou 6,
caractérisé en ce que
l'outil est en roue libre quand il est en prise avec la pièce lors du prérodage et du rodage de finition qui le suit.

8. Procédé selon la revendication 5 ou 6,
caractérisé en ce que
l'outil est guidé impérativement lorsqu'il est en prise avec la pièce pendant le prérodage et il est en roue libre pendant le rodage de finition qui suit.

9. Procédé selon l'une des revendications 1 à 8,
caractérisé en ce qu'
on utilise un outil qui présente deux (ou plus) dentures, disposées côte à côte en direction axiale et qui sont amenées par coulissement selon l'axe X et/ou y et/ou Z, dans leur position de travail qui se trouve au croisement ou en dehors du croisement des axes.

10. Procédé selon la revendication 3 ou 4,
caractérisé en ce qu'
on utilise un outil à denture interne pour effectuer, entre les zones à correction de largeur cinématiquement différente, un passage tangentiel.

11. Procédé selon la revendication 10,
caractérisé en ce que
les zones de l'outil à correction de la largeur cinématiquement différemment active sont séparées par une zone sans contact.

12. Procédé selon la revendication 10 ou 11,
caractérisé en ce que
les zones de l'outil à correction de largeur cinématiquement différemment active sont équipées de matériaux de coupe différents et/ou ont des géométries de coupe différentes.

13. Procédé selon l'une des revendications 10 à 12,
caractérisé en ce que
l'outil est composé de deux parties dont les dentures sont différentes par leurs corrections de largeur cinématiquement actives.

14. Procédé selon l'une des revendications 10 à 13,
caractérisé en ce que
l'outil comporte deux (ou plus) dentures du genre indiqué, disposées côte à côte selon la direction axiale.

15. Procédé pour dresser un outil à denture interne comportant une roue dentée de dressage dont la denture a des caractéristiques correspondant à celles de la pièce que doit usiner l'outil et a les flancs de ses dents garnis de grains abrasifs extrêmement durs,
caractérisé en ce que
le processus est celui des revendications 1 et 2 avec cette précision que la roue de dressage est utilisée comme outil tandis que l'outil à denture interne joue le rôle de pièce.

16. Procédé selon la revendication 15, appliqué à un outil dont la denture comporte une zone de prérodage et une zone de rodage final,
caractérisé en ce que
la zone de prérodage ainsi que la zone de rodage final sont dressées avec guidage imposé et contact sur un flanc entre la roue de dressage et l'outil à denture interne.

17. Procédé selon la revendication 15 ou 16,
caractérisé en ce qu'
on utilise une roue de dressage qui présente un chanfrein frontal d'au moins 45° qui couvre toute la hauteur de la dent et qui est, le cas échéant, également garni de grains abrasifs extrêmement durs.
